(19) **Europäisches Patentamt / European Patent Office / Office européen des brevets**

(11) **EP 4 425 635 A1**

(12) # EUROPEAN PATENT APPLICATION
published in accordance with Art. 153(4) EPC

(43) Date of publication:
**04.09.2024 Bulletin 2024/36**

(21) Application number: **21962019.2**

(22) Date of filing: **01.11.2021**

(51) International Patent Classification (IPC):
**H01M 10/058** (2010.01)   **H01M 50/00** (2021.01)

(52) Cooperative Patent Classification (CPC):
**Y02E 60/10**

(86) International application number:
**PCT/CN2021/127967**

(87) International publication number:
**WO 2023/070669 (04.05.2023 Gazette 2023/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Dongguan Amperex Technology Limited**
**Dongguan City, Guangdong Province 523000 (CN)**

(72) Inventor: **HU, Kewen**
**Ningde, Fujian 352100 (CN)**

(74) Representative: **Icosa**
**83 avenue Denfert-Rochereau**
**75014 Paris (FR)**

(54) **ELECTROCHEMICAL APPARATUS AND ELECTRONIC APPARATUS INCLUDING SAME**

(57) This application relates to an electrochemical device and an electronic device containing same. The electrochemical device according to this application includes an electrode assembly, a shell, and an adhesive layer. The adhesive layer is disposed between the electrode assembly and the shell to fasten the electrode assembly and the shell. The adhesive layer includes a flexible layer and a sticky layer. The sticky layer is disposed on an outer surface of the electrode assembly. The flexible layer is disposed on one side of the sticky layer, and the side is oriented away from the electrode assembly. An impact-induced thickness change rate of the adhesive layer is 10% to 40%. The electrochemical device according to this application can effectively improve the lateral extrusion test pass rate and the heavy impact test pass rate.

FIG. 1

**Description**

**TECHNICAL FIELD**

This application relates to the technical field of energy storage, and in particular, to an electrochemical device and an electronic device containing the electrochemical device.

**BACKGROUND**

When a lithium-ion battery is laterally squeezed or impacted by a heavy object, the battery is prone to fracture and result in a contact between a positive electrode and a negative electrode, thereby leading to a short circuit of the battery and occurrence of accidents such as a fire or explosion. Currently, main solutions to this problem include two approaches. First, for a pouch cell with a thickness of less than 3.0 mm, a high-adhesion separator is applied to bond the positive electrode and the negative electrode together, so as to ensure strong adhesion between the positive electrode and the negative electrode and make the electrodes become a whole so that the whole battery is completely fractured when being laterally squeezed or impacted by a heavy object. Second, for a pouch cell thicker than 3.0 mm, a hot-melt adhesive tape or adhesive paper or the like is disposed inside an electrode assembly and on an outermost layer of the electrode assembly to buffer the stress, make the battery not prone to be smashed apart, obstruct the fracture debris, and avoid the contact between the positive electrode and the negative electrode.

CN 109256580A discloses a pouch-type lithium-ion battery that includes a positive electrode plate and a negative electrode plate wound together. A hot-melt adhesive tape of a size equivalent to the size of the electrode plate is inserted between the positive electrode plate and the negative electrode plate in an intermediate layer, and between the positive electrode plate and the negative electrode plate on the upper and lower outermost layers separately. When the battery is impacted by a heavy object, the hot-melt adhesive absorbs heat and melts to bond the positive and negative electrode plates and the separator together. In this way, a battery cell does not break off easily when being smashed, thereby improving the heavy impact test pass rate. However, in the prior art, inserting the hot-melt adhesive tape directly between the positive electrode plate and the negative electrode plate gives rise to the following problem: the positive electrode plate is prone to be detached from the negative electrode plate, and it is impracticable to bond the positive and negative electrode plates and the separator together by heat absorption and melting in a short time. In addition, a base material of the hot-melt adhesive tape, such as PET/PI, is not tough enough. On the one hand, this leads to failure to effectively disperse the impact stress, the battery is prone to be fractured at a local region, and a short circuit is prone to occur between the positive electrode and the negative electrode due to mutual contact. Furthermore, heat, smoke, and fire may occur, thereby resulting in failure of the battery. On the other hand, the hot-melt adhesive tape is not deformable along with the fracture, and is unable to serve the function of isolating the fracture debris of the positive and negative electrodes. When the fracture debris contacts each other, a short circuit is also prone to occur, further giving rise to heat, smoke, fire, and battery failure.

**SUMMARY**

In view of the technical problems in the prior art, this application provides an electrochemical device. In the electrochemical device, a highly flexible adhesive layer with a high buffering capacity is disposed between an electrode assembly and a shell. The adhesive layer includes a flexible layer and a sticky layer, and is configured to fasten the electrode assembly and the shell. The electrochemical device according to this application can effectively improve the lateral extrusion test pass rate and the heavy impact test pass rate. This application further relates to an electronic device containing the electrochemical device.

According to a first aspect, this application provides an electrochemical device. The electrochemical device includes an electrode assembly, a shell, and an adhesive layer. The adhesive layer is disposed between the electrode assembly and the shell to fasten the electrode assembly and the shell. The adhesive layer includes a flexible layer and a sticky layer. The sticky layer is disposed on an outer surface of the electrode assembly. The flexible layer is disposed on one side of the sticky layer, and the side is oriented away from the electrode assembly. An impact-induced thickness change rate of the adhesive layer is 10% to 40%. In this application, the impact-induced thickness change rate of the adhesive layer is a rate of change of the thickness of the adhesive layer measured before and after impact in a ball drop impact test, and is calculated as: impact-induced thickness change rate of the adhesive layer (%) = (thickness of the adhesive layer before impact - thickness of the adhesive layer after impact)/thickness of the adhesive layer before impact $\times$ 100%. In the ball drop impact test, a 50 g standard steel ball drops freely without an initial velocity from a height of 20 cm onto the adhesive layer.

According to some embodiments of this application, the impact-induced thickness change rate of the adhesive layer is controlled to fall within the range of 10% to 40% to improve the lateral extrusion test pass rate and the heavy impact test pass rate of the electrochemical device. If the impact-induced thickness change rate of the adhesive layer is less than 10%, the stress-resisting capability of the adhesive layer is low. If the impact-induced thickness change rate of the adhesive layer is greater than 40%, the elasticity of the adhesive layer is relatively high, and accordingly, the stickiness and flexibility of the adhesive layer are relatively low. According to some embodiments of this application, the impact-induced thickness change rate of the adhesive layer is 10%, 12%, 15%, 18%, 20%, 22%, 25%, 28%, 30%, 32%, 35%, 38%, 40%, or a value falling within a range formed by any two thereof. According to some embodiments of this application, the impact-induced thickness change rate of the adhesive layer is 15% to 30%.

According to some embodiments of this application, a thickness recovery rate of the adhesive layer rested for 1 hour after impact is 2% to 30%. In this application, resting the adhesive layer for 1 hour after impact refers to resting the adhesive layer for 1 hour after the adhesive layer undergoes a ball drop impact test (a 50 g standard steel ball drops freely without an initial velocity from a height of 20 cm onto the adhesive layer). The thickness recovery rate of the adhesive layer is calculated as: thickness recovery rate (%) = (thickness of the adhesive layer after resting for 1 hour after impact - thickness of the adhesive layer after impact)/thickness of the adhesive layer after impact × 100%. According to some embodiments of this application, after the adhesive layer is rested for 1 hour after impact, the thickness recovery rate of the adhesive layer is 2%, 5%, 8%, 10%, 12%, 15%, 18%, 20%, 22%, 25%, 28%, 30%, or a value falling within a range formed by any two thereof. According to some embodiments of this application, a thickness recovery rate of the adhesive layer rested for 1 hour after impact is 10% to 30%. The thickness recovery rate that falls within the above range after the adhesive layer is rested for 1 hour after impact improves the lateral extrusion test pass rate and the heavy impact test pass rate of the electrochemical device. If the thickness recovery rate of the adhesive layer is less than 2%, the resilience of the adhesive layer subjected to an external impact is low. If the thickness recovery rate of the adhesive layer is greater than 30%, the elasticity of the adhesive layer is relatively high, and accordingly, the stickiness and flexibility of the adhesive layer are relatively low.

According to some embodiments of this application, a break-elongation rate of the flexible layer is 80% to 800%. In some embodiments of this application, a break-elongation rate of the flexible layer is 80%, 100%, 150%, 200%, 250%, 300%, 350%, 400%, 450%, 500%, 550%, 600%, 650%, 700%, 750%, 800%, or a value falling within a range formed by any two thereof. According to some embodiments of this application, a break-elongation rate of the flexible layer is 300% to 620%. If the break-elongation rate of the flexible layer is less than 80%, the flexibility of the adhesive layer is relatively low. When the break-elongation rate of the flexible layer falls within the above specified range, the electrochemical device exhibits a high lateral extrusion test pass rate.

According to some embodiments of this application, an elastic modulus of the flexible layer is 2 MPa to 100 MPa. In some embodiments of this application, the elastic modulus of the flexible layer is 2 MPa, 5 MPa, 10 MPa, 15 MPa, 20 MPa, 25 MPa, 30 MPa, 35 MPa, 40 MPa, 45 MPa, 50 MPa, 55 MPa, 60MPa, 65MPa, 70MPa, 75MPa, 80MPa, 85MPa, 90MPa, 95MPa, 100MPa, or a value falling within a range formed by any two thereof. According to some embodiments of this application, an elastic modulus of the flexible layer is 4 MPa to 60 MPa. If the elastic modulus of the flexible layer is greater than 100 MPa, the flexibility of the adhesive layer is relatively low. When the elastic modulus of the flexible layer falls within the above specified range, the electrochemical device exhibits a high lateral extrusion test pass rate.

According to some embodiments of this application, the flexible layer includes a sticky material, an elastic material, and an inorganic filler. In the flexible layer of this application, the sticky material is of low strength. When the sticky material is impacted by an external force, the work done by the external force is converted into internal energy of the sticky material, thereby playing a role in protecting the electrode assembly. The elastic material is of high elasticity and high strength. When the elastic material is impacted by an external force, the work done by the external force is converted into elastic potential energy to do work on the electrode assembly and the sticky material concurrently. The sticky material works synergistically with the elastic material, thereby not only deforming by a sufficient amount when impacted by an external force, but also recovering from deformation by a sufficient amount when the external force is withdrawn.

According to some embodiments of this application, based on a total mass of the flexible layer, a mass percent of the sticky material is 70% to 95%, a mass percent of the elastic material is 4% to 30%, and a mass percent of the inorganic filler is 1 % to 5%. According to some embodiments of this application, based on a total mass of the flexible layer, a mass percent of the sticky material is 70%, 72%, 75%, 78%, 80%, 82%, 85%, 88%, 90%, 92%, 95%, or a value falling within a range formed by any two thereof. According to some embodiments of this application, based on a total mass of the flexible layer, a mass percent of the elastic material is 4%, 6%, 8%, 10%, 12%, 14%, 16%, 18%, 20%, 22%, 24%, 26%, 28%, 30%, or a value falling within a range formed by any two thereof. According to some embodiments of this application, based on a total mass of the flexible layer, a mass percent of the inorganic filler is 1%, 1.2%, 1.4%, 1.6%, 1.8%, 2%, 2.2%, 2.4%, 2.6%, 2.8%, 3%, 3.2%, 3.4%, 3.6%, 3.8%, 4%, or a value falling within a range formed by any two thereof. By adjusting the constituents of the flexible layer, the ability of the adhesive layer to return to an "original state" after impact is improved, thereby improving the ability to withstand a second impact. When the mass percent of the sticky material is overly high, a sufficiently large external force may "break through" the adhesive layer, and does work directly on the electrode assembly, thereby being unfavorable to protecting the electrode assembly.

According to some embodiments of this application, in the flexible layer, the sticky material includes one or more of poly(1,3-butadiene), cast polypropylene, or polycarbonate. According to some embodiments of this application, in the flexible layer, the elastic material includes one or more of poly(ethylene-co-vinyl acetate), polyurethane elastomer, poly(styrene-b-butadiene-b-styrene), poly(styrene-b-isoprene-b-styrene), poly(styrene-b-ethylene-b-propylene-b-styrene), poly(styrene-b-ethylene-b-butylene-b-styrene), polybutadiene, or polyisobutylene. According to some embodiments of this application, in the flexible layer, the inorganic filler includes one or more of titanium dioxide powder, aluminum oxide, calcium sulfate, or barium sulfate. The sticky material imparts adhesion and is of high flexibility. The elastic material counteracts the impact stress. The inorganic filler is configured to increase the strength of the adhesive layer.

According to some embodiments of this application, the adhesive layer satisfies at least one of the following conditions (a) to (c): (a) a thickness of the flexible layer is 12 $\mu$m to 42 $\mu$m; (b) a thickness of the sticky layer is 3 $\mu$m to 8 $\mu$m; or (c) a dissolution rate of the adhesive layer in a lithium salt-free electrolyte solution is 0% to 10%. In this application, the dissolution rate of the adhesive layer in a lithium salt-free electrolyte solution represents the rate of change in the weight of the adhesive layer after the adhesive layer is soaked in the lithium salt-free electrolyte solution and oven-dried, and may be calculated by the following formula: dissolution rate = (weight before soaking - weight after oven-drying)/weight before soaking $\times$ 100%. The temperature of soaking may be 50 °C to 70 °C, and the duration of soaking may be 5 days to 8 days. The duration of oven-drying may be 5 days to 8 days, and the temperature of oven-drying may be 80 °C to 90 °C. The lithium salt-free electrolyte solution includes ethylene carbonate (EC), propylene carbonate (PC), diethyl carbonate (DEC), and ethyl propionate epoxy resin (EP). In some specific embodiments, the constituents of the lithium salt-free electrolyte solution for testing the dissolution rate of the adhesive layer are: ethylene carbonate (EC), propylene carbonate (PC), diethyl carbonate (DEC), and ethyl propionate epoxy resin (EP), and are mixed at a mass ratio of EC: PC: DEC: EP = 3: 1: 3: 3.

According to some embodiments of this application, the thickness of the flexible layer is 12 $\mu$m to 42 $\mu$m. In some embodiments of this application, the thickness of the flexible layer is 12 $\mu$m, 15 $\mu$m, 18 $\mu$m, 20 $\mu$m, 22 $\mu$m, 25 $\mu$m, 28 $\mu$m, 30 $\mu$m, 32 $\mu$m, 35 $\mu$m, 38 $\mu$m, 40 $\mu$m, 42 $\mu$m, or a value falling within a range formed by any two thereof. According to some embodiments of this application, the thickness of the flexible layer is 18 $\mu$m to 30 $\mu$m. The greater the thickness of the flexible layer, the greater the bonding force, the higher the flexibility, and the stronger the buffering effect against an external impact stress, thereby improving the lateral extrusion test pass rate and the heavy impact test pass rate. However, an excessive thickness may lead to a loss of the energy density of the electrochemical device. Therefore, the thickness of the flexible layer needs to be controlled to be in the above appropriate range.

According to some embodiments of this application, the thickness of the sticky layer is 3 $\mu$m to 8 $\mu$m. In some embodiments of this application, the thickness of the sticky layer is 3 $\mu$m, 3.5 $\mu$m, 4 $\mu$m, 4.5 $\mu$m, 5 $\mu$m, 5.5 $\mu$m, 6 $\mu$m, 6.5 $\mu$m, 7 $\mu$m, 7.5 $\mu$m, 8 $\mu$m, or a value falling within a range formed by any two thereof. According to some embodiments of this application, the thickness of the sticky layer is 4 $\mu$m to 6 $\mu$m. The greater the thickness of the sticky layer, the greater the bonding force. However, this does not produce a significant effect in improving the lateral extrusion test pass rate and the heavy impact test pass rate of the electrochemical device, and results in a loss of energy density of the electrochemical device. Therefore, the thickness of the sticky layer needs to be controlled to be in the above appropriate range.

According to some embodiments of this application, the thickness of the adhesive layer is 15 $\mu$m to 50 $\mu$m. In some embodiments of this application, the thickness of the adhesive layer is 15 $\mu$m, 20 $\mu$m, 25 $\mu$m, 30 $\mu$m, 35 $\mu$m, 40 $\mu$m, 45 $\mu$m, 50 $\mu$m, or a value falling within a range formed by any two thereof. According to some embodiments of this application, the thickness of the adhesive layer is 22 $\mu$m to 36 $\mu$m. Controlling the thickness of the adhesive layer to be in the above range improves the lateral extrusion test pass rate and heavy impact test pass rate of the electrochemical device.

According to some embodiments of this application, a dissolution rate of the adhesive layer in a lithium salt-free electrolyte solution is 0% to 10%. In some embodiments of this application, the dissolution rate of the adhesive layer in a lithium salt-free electrolyte solution is 0%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, or a value falling within a range formed by any two thereof.

According to some embodiments of this application, the sticky layer includes one or more of polymethyl methacrylate, polypropylene, rubber, polyethylene, or polyamide.

According to some embodiments of this application, disposing the sticky layer on the outer surface of the electrode assembly includes: adhering the sticky layer directly or indirectly onto the outer surface of the electrode assembly, where the indirect adhesion is to adhere the sticky layer onto an adhesive tape on the outer surface of the electrode assembly to achieve the purpose of adhering the electrode assembly. According to some embodiments of this application, the sticky layer is located on a surface of the electrode assembly, a surface of a copper foil, a surface of an aluminum foil, a surface of a separator, a surface of an electrode plate, or the like. According to some embodiments of this application, as required by the application scenario of the battery, based on a total area of the outer surface of the electrode assembly, a percentage of a bonding area of the sticky layer is 20% to 100%. In some embodiments of this application, based on a total area of the outer surface of the electrode assembly, a percentage of a bonding area of the sticky layer is 20%, 25%, 30%, 35%, 40%, 45%, 50%, 55%, 60%, 65%, 70%, 75%, 80%, 85%, 90%, 95%, 100%, or a value falling within a range formed by any two thereof.

According to some embodiments of this application, a bonding force between the sticky layer and the outer surface of the electrode assembly is 0.1 N/mm to 1.0 N/mm. According to some embodiments of this application, a bonding force between the sticky layer and the outer surface of the electrode assembly is 0.1 N/mm, 0.2 N/mm, 0.3 N/mm, 0.4 N/mm, 0.5 N/mm, 0.6 N/mm, 0.7 N/mm, 0.8 N/mm, 0.9 N/mm, 1 N/mm, or a value falling within a range formed by any two thereof.

According to some embodiments of this application, a method for preparing an adhesive layer includes the steps: S1: mixing a sticky material, an elastic material, and an inorganic filler to obtain a mixture; S2: subjecting the mixture to melting, extrusion, tape-casting, cooling and molding, pulling, and heat-treatment sequentially to obtain a flexible layer; and S3: applying a sticky layer onto the flexible layer to obtain an adhesive layer. According to some specific embodiments of this application, in step S2, the heat-treatment is performed at a temperature of 150 °C to 200 °C for a duration of 1 h to 2 h. The heat-treatment helps to eliminate stress. According to some embodiments of this application, a single-sided or double-sided silicone release paper/release film is affixed onto the other side of the sticky layer in the adhesive layer, the side being oriented away from the flexible layer, thereby producing an adhesive layer that is conveniently storable and processable.

According to some embodiments of this application, the adhesive layer may be bonded onto a surface of the shell in the electrochemical device through the sticky layer.

According to a second aspect, this application further provides an electronic device. The electronic device includes the electrochemical device according to the first aspect of this application.

In the electrochemical device of this application, an adhesive layer is disposed between the electrode assembly and the shell to fasten the electrode assembly and the shell. The adhesive layer includes a flexible layer and a sticky layer. The sticky layer is disposed on the outer surface of the electrode assembly, and the flexible layer is disposed on one side of the sticky layer, the side being oriented away from the electrode assembly. After being hot-pressed, the flexible layer is bonded to the shell, so that the adhesive layer fastens the electrode assembly and the shell. The electrochemical device according to this application can effectively improve the lateral extrusion test pass rate and the heavy impact test pass rate, and in turn, enhance the safety performance.

## BRIEF DESCRIPTION OF DRAWINGS

FIG. 1 is a schematic structural diagram of an adhesive layer of an electrochemical device according to an embodiment of this application;
FIG. 2a is a schematic diagram of a jelly-roll structure of an electrochemical device according to an embodiment of this application, in which an adhesive layer is affixed onto both sides of a main body of an electrode assembly;
FIG. 2b is a schematic diagram of a jelly-roll structure of an electrochemical device according to another embodiment of this application, in which an adhesive layer is affixed onto a single side of a main body of an electrode assembly;
FIG. 2c is a schematic diagram of a jelly-roll structure of an electrochemical device according to another embodiment of this application, in which an adhesive layer is affixed onto both sides of a main body of an outer pocket or shell;
FIG. 2d is a schematic diagram of a jelly-roll structure of an electrochemical device according to another embodiment of this application, in which an adhesive layer is affixed onto a single side of a main body of an outer pocket or shell; and
FIG. 3 is a schematic diagram of a test device in a ball drop impact test according to an embodiment of this application.

List of reference numerals:

1. electrode assembly; 2. flexible layer; 3. sticky layer. 4. sticky material; 5. elastic material; 6. shallow pit side; 7. deep pit side; 8. aluminum current collector in a single-side-coated region; 9. shell. 10. adhesive layer; 11. front of shell body; 12. back of shell body; 13. hard platform; 14. specimen; 15. ruler; 16. impact ball.

## DETAILED DESCRIPTION

To make the objectives, technical solutions, and advantages of this application clearer, the following gives a clear and comprehensive description of the technical solutions of this application with reference to embodiments. Evidently, the described embodiments are merely a part of but not all of the embodiments of this application. The embodiments described herein are illustrative in nature, and are intended to enable a basic understanding of this application.

No embodiment of this application is to be construed as a limitation on this application.

For brevity, some specific numerical ranges are disclosed herein for illustrative purpose only. However, any lower limit may be combined with any upper limit to form an unspecified range, any lower limit may be combined with any other lower limit to form an unspecified range, and any upper limit may be combined with any other upper limit to form an unspecified range. In addition, each separately disclosed point or single numerical value may be used as a lower limit or upper limit to combine with any other point or other single numerical value or with any other lower or upper limit to form an unspecified range.

In the description of this application, unless otherwise specified, a numerical value qualified by "at least" or "at most" includes this numerical value.

Unless otherwise specified, the terms used in this application have the well-known meanings commonly understood by a person skilled in the art. Unless otherwise specified, the value of a parameter mentioned in this application may be measured by various measurement methods commonly used in the art (for example, may be tested according to the method described in an embodiment of this application).

A list of items referred to by the terms such as "at least one of", "at least one thereof", "at least one type of" may mean any combination of the listed items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C. The item A may include a single component or a plurality of components. The item B may include a single component or a plurality of components. The item C may include a single component or a plurality of components.

I. Electrochemical Device

According to a first aspect, this application provides an electrochemical device. The electrochemical device includes an electrode assembly 1, a shell 9, and an adhesive layer 10. The adhesive layer 10 is disposed between the electrode assembly 1 and the shell 9 to fasten the electrode assembly 1 and the shell 9. The adhesive layer 10 includes a flexible layer 2 and a sticky layer 3. The sticky layer 3 is disposed on an outer surface of the electrode assembly 1. The flexible layer 2 is disposed on one side of the sticky layer 3, and the side is oriented away from the electrode assembly 1. An impact-induced thickness change rate of the adhesive layer 10 is 10% to 40%. In this application, the impact-induced thickness change rate of the adhesive layer 10 is a rate of change of the thickness of the adhesive layer 10 measured before and after impact in a ball drop impact test of the adhesive layer 10, and is calculated as: impact-induced thickness change rate of the adhesive layer 10 (%) = (thickness of the adhesive layer 10 before impact - thickness of the adhesive layer 10 after impact)/thickness of the adhesive layer 10 before impact $\times$ 100%. In the ball drop impact test, a 50 g standard steel ball drops freely without an initial velocity from a height of 20 cm onto the adhesive layer 10.

According to some embodiments of this application, disposing the sticky layer 3 on the outer surface of the electrode assembly 1 is to dispose the sticky layer 3 directly on the outer surface. According to some other embodiments of this application, disposing the sticky layer 3 on the outer surface of the electrode assembly 1 is to adhere the sticky layer 3 indirectly onto the outer surface of the electrode assembly 1 by using adhesive tape.

According to some embodiments of this application, controlling the impact-induced thickness change rate of the adhesive layer 10 to fall within the range of 10% to 40% improves the lateral extrusion test pass rate and the heavy impact test pass rate of the electrochemical device. If the impact-induced thickness change rate of the adhesive layer 10 is less than 10%, the stress-resisting capability of the adhesive layer 10 is low. If the impact-induced thickness change rate of the adhesive layer 10 is greater than 40%, the elasticity of the adhesive layer 10 is relatively high, and accordingly, the stickiness and flexibility of the adhesive layer 10 are relatively low. According to some embodiments of this application, the impact-induced thickness change rate of the adhesive layer 10 is 10%, 12%, 15%, 18%, 20%, 22%, 25%, 28%, 30%, 32%, 35%, 38%, 40%, or a value falling within a range formed by any two thereof. According to some embodiments of this application, the impact-induced thickness change rate of the adhesive layer 10 is 15% to 30%.

According to some embodiments of this application, a thickness recovery rate of the adhesive layer 10 rested for 1 hour after impact is 2% to 30%. In this application, resting the adhesive layer 10 for 1 hour after impact refers to resting the adhesive layer 10 for 1 hour after the adhesive layer 10 undergoes a ball drop impact test (a 50 g standard steel ball drops freely without an initial velocity from a height of 20 cm onto the adhesive layer 10). The thickness recovery rate of the adhesive layer 10 is calculated as: thickness recovery rate (%) = (thickness of the adhesive layer 10 after resting for 1 hour after impact - thickness of the adhesive layer 10 after impact)/thickness of the adhesive layer 10 after impact $\times$ 100%. According to some embodiments of this application, after the adhesive layer is rested for 1 hour after impact, the thickness recovery rate of the adhesive layer 10 is 2%, 5%, 8%, 10%, 12%, 15%, 18%, 20%, 22%, 25%, 28%, 30%, or a value falling within a range formed by any two thereof. According to some embodiments of this application, a thickness recovery rate of the adhesive layer 10 rested for 1 hour after impact is 10% to 30%. The thickness recovery rate that falls within the above range after the adhesive layer 10 is rested for 1 hour after impact improves the lateral extrusion test pass rate and the heavy impact test pass rate of the electrochemical device. If the thickness recovery rate of the adhesive layer 10 rested for 1 hour after impact is less than 2%, the resilience of the adhesive layer 10 subjected to an external impact is low. If the thickness recovery rate of the adhesive layer 10 rested for 1 hour after impact is greater than 30%, the elasticity of the adhesive layer 10 is relatively high, and accordingly, the stickiness and flexibility of the adhesive layer 10 are relatively low.

According to some embodiments of this application, a break-elongation rate of the flexible layer 2 is 80% to 800%. In some embodiments of this application, a break-elongation rate of the flexible layer 2 is 80%, 100%, 150%, 200%, 250%, 300%, 350%, 400%, 450%, 500%, 550%, 600%, 650%, 700%, 750%, 800%, or a value falling within a range formed by any two thereof. According to some embodiments of this application, a break-elongation rate of the flexible layer 2 is 300% to 620%. If the break-elongation rate of the flexible layer 2 is less than 80%, the flexibility of the adhesive layer 10 is relatively low. When the break-elongation rate of the flexible layer 2 falls within the above specified range, the electrochemical device exhibits a high lateral extrusion test pass rate.

According to some embodiments of this application, an elastic modulus of the flexible layer 2 is 2 MPa to 100 MPa. In some embodiments of this application, the elastic modulus of the flexible layer 2 is 2 MPa, 5 MPa, 10 MPa, 15 MPa, 20 MPa, 25 MPa, 30 MPa, 35 MPa, 40 MPa, 45 MPa, 50 MPa, 55 MPa, 60MPa, 65MPa, 70MPa, 75MPa, 80MPa, 85MPa, 90MPa, 95MPa, 100MPa, or a value falling within a range formed by any two thereof. According to some embodiments of this application, an elastic modulus of the flexible layer 2 is 4 MPa to 60 MPa. If the elastic modulus of the flexible layer 2 is greater than 100 MPa, the flexibility of the adhesive layer 10 is relatively low. When the elastic modulus of the flexible layer 2 falls within the above specified range, the electrochemical device exhibits a high lateral extrusion test pass rate.

According to some embodiments of this application, the flexible layer 2 includes a sticky material 4, an elastic material 5, and an inorganic filler. In the flexible layer 2 of this application, the sticky material 4 is of low strength. When the sticky material is impacted by an external force, the work done by the external force is converted into internal energy of the sticky material 4, thereby playing a role in protecting the electrode assembly 1. The elastic material 5 is of high elasticity and high strength. When the elastic material is impacted by an external force, the work done by the external force is converted into elastic potential energy to do work on the electrode assembly 1 and the sticky material 4 concurrently. The sticky material 4 works synergistically with the elastic material 5, thereby not only deforming by a sufficient amount when impacted by an external force, but also recovering from deformation by a sufficient amount when the external force is withdrawn.

According to some embodiments of this application, based on a total mass of the flexible layer 2, a mass percent of the sticky material 4 is 70% to 95%, a mass percent of the elastic material 5 is 4% to 30%, and a mass percent of the inorganic filler is 1% to 5%. According to some embodiments of this application, based on a total mass of the flexible layer 2, a mass percent of the sticky material 4 is 70%, 72%, 75%, 78%, 80%, 82%, 85%, 88%, 90%, 92%, 95%, or a value falling within a range formed by any two thereof. According to some embodiments of this application, based on a total mass of the flexible layer 2, a mass percent of the elastic material 5 is 4%, 6%, 8%, 10%, 12%, 14%, 16%, 18%, 20%, 22%, 24%, 26%, 28%, 30%, or a value falling within a range formed by any two thereof. According to some embodiments of this application, based on a total mass of the flexible layer 2, a mass percent of the inorganic filler is 1%, 1.2%, 1.4%, 1.6%, 1.8%, 2%, 2.2%, 2.4%, 2.6%, 2.8%, 3%, 3.2%, 3.4%, 3.6%, 3.8%, 4%, or a value falling within a range formed by any two thereof. By adjusting the constituents of the flexible layer 2, the ability of the adhesive layer 10 to return to an "original state" after impact is improved, thereby improving the ability to withstand a second impact. When the mass percent of the sticky material 4 is overly high, a sufficiently large external force may "break through" the adhesive layer 10, and does work directly on the electrode assembly 1, thereby being unfavorable to protecting the electrode assembly 1.

According to some embodiments of this application, in the flexible layer 2, the sticky material 4 includes one or more of poly(1,3-butadiene), cast polypropylene, or polycarbonate. According to some embodiments of this application, in the flexible layer 2, the elastic material 5 includes one or more of poly(ethylene-co-vinyl acetate), polyurethane elastomer, poly(styrene-b-butadiene-b-styrene), poly(styrene-b-isoprene-b-styrene), poly(styrene-b-ethylene-b-propylene-b-styrene), poly(styrene-b-ethylene-b-butylene-b-styrene), polybutadiene, or polyisobutylene. According to some embodiments of this application, in the flexible layer 2, the inorganic filler includes one or more of titanium dioxide powder, aluminum oxide, calcium sulfate, or barium sulfate. The sticky material 4 imparts adhesion and is of high flexibility. The elastic material 5 counteracts the impact stress. The inorganic filler is configured to increase the strength of the adhesive layer 10.

According to some embodiments of this application, the adhesive layer satisfies at least one of the following conditions (a) to (c): (a) a thickness of the flexible layer 2 is 12 $\mu$m to 42 $\mu$m; (b) a thickness of the sticky layer 3 is 3 $\mu$m to 8 $\mu$m; or (c) a dissolution rate of the adhesive layer 10 in a lithium salt-free electrolyte solution is 0% to 10%. In this application, the dissolution rate of the adhesive layer 10 in a lithium salt-free electrolyte solution represents the rate of change in the weight of the adhesive layer after the adhesive layer 10 is soaked in the lithium salt-free electrolyte solution and oven-dried, and may be calculated by the following formula: dissolution rate = (weight before soaking - weight after oven-drying)/weight before soaking × 100%. The temperature of soaking may be 50 °C to 70 °C, and the duration of soaking may be 5 days to 8 days. The duration of oven-drying may be 5 days to 8 days, and the temperature of oven-drying may be 80 °C to 90 °C. The lithium salt-free electrolyte solution includes ethylene carbonate (EC), propylene carbonate (PC), diethyl carbonate (DEC), and ethyl propionate epoxy resin (EP). In some specific embodiments, the constituents of the lithium salt-free electrolyte solution for testing the dissolution rate of the adhesive layer are: ethylene carbonate (EC), propylene carbonate (PC), diethyl carbonate (DEC), and ethyl propionate epoxy resin (EP), and are mixed at a mass ratio of EC: PC: DEC: EP = 3: 1: 3: 3.

According to some embodiments of this application, the thickness of the flexible layer 2 is 12 μm to 42 μm. In some embodiments of this application, the thickness of the flexible layer 2 is 12 μm, 15 μm, 18 μm, 20 μm, 22 μm, 25 μm, 28 μm, 30 μm, 32 μm, 35 μm, 38 μm, 40 μm, 42 μm, or a value falling within a range formed by any two thereof. According to some embodiments of this application, the thickness of the flexible layer 2 is 18 μm to 30 μm. The greater the thickness of the flexible layer 2, the greater the bonding force, and the stronger the buffering effect against an external impact stress, thereby improving the lateral extrusion test pass rate and the heavy impact test pass rate. However, an excessive thickness may lead to a loss of the energy density of the electrochemical device. Therefore, the thickness of the flexible layer 2 needs to be controlled to be in the above appropriate range.

According to some embodiments of this application, the thickness of the sticky layer 3 is 3 μm to 8 μm. In some embodiments of this application, the thickness of the sticky layer 3 is 3 μm, 3.5 μm, 4 μm, 4.5 μm, 5 μm, 5.5 μm, 6 μm, 6.5 μm, 7 μm, 7.5 μm, 8 μm, or a value falling within a range formed by any two thereof. According to some embodiments of this application, the thickness of the sticky layer 3 is 4 μm to 6 μm. The greater the thickness of the sticky layer 3, the greater the bonding force. However, this does not produce a significant effect in improving the lateral extrusion test pass rate and the heavy impact test pass rate of the electrochemical device, and results in a loss of energy density of the electrochemical device. Therefore, the thickness of the sticky layer needs to be controlled to be in the above appropriate range.

According to some embodiments of this application, the thickness of the adhesive layer 10 is 15 μm to 50 μm. In some embodiments of this application, the thickness of the adhesive layer 10 is 15 μm, 20 μm, 25 μm, 30 μm, 35 μm, 40 μm, 45 μm, 50 μm, or a value falling within a range formed by any two thereof. According to some embodiments of this application, the thickness of the adhesive layer 10 is 22 μm to 36 μm. Controlling the thickness of the adhesive layer 10 to be in the above range improves the lateral extrusion test pass rate and heavy impact test pass rate of the electrochemical device.

According to some embodiments of this application, a dissolution rate of the adhesive layer 10 in a lithium salt-free electrolyte solution is 0% to 10%. In some embodiments of this application, the dissolution rate of the adhesive layer 10 in a lithium salt-free electrolyte solution is 0%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, or a value falling within a range formed by any two thereof.

According to some embodiments of this application, the sticky layer 3 includes one or more of polymethyl methacrylate, polypropylene, rubber, polyethylene, or polyamide.

According to some embodiments of this application, the sticky layer 3 is disposed on the outer surface of the electrode assembly 1. According to some embodiments of this application, the sticky layer 3 is located on a surface of the electrode assembly 1, a surface of a copper foil, a surface of an aluminum foil, a surface of a separator, a surface of an electrode plate, or the like. According to some embodiments of this application, as required by the application scenario of the battery, an area percentage of the sticky layer 3 in the surface of the electrode assembly 1 to which the sticky layer is affixed is 20% to 100%. According to some embodiments of this application, an area percentage of the sticky layer 3 in the surface of the electrode assembly 1 to which the sticky layer is affixed is 20%, 25%, 30%, 35%, 40%, 45%, 50%, 55%, 60%, 65%, 70%, 75%, 80%, 85%, 90%, 95%, 100%, or a value falling within a range formed by any two thereof.

According to some embodiments of this application, a bonding force between the sticky layer 3 and the outer surface of the electrode assembly 1 is 0.1 N/mm to 1.0 N/mm. According to some embodiments of this application, a bonding force between the sticky layer 3 and the outer surface of the electrode assembly 1 is 0.1 N/mm, 0.2 N/mm, 0.3 N/mm, 0.4 N/mm, 0.5 N/mm, 0.6 N/mm, 0.7 N/mm, 0.8 N/mm, 0.9 N/mm, 1 N/mm, or a value falling within a range formed by any two thereof.

According to some embodiments of this application, a method for preparing an adhesive layer 10 includes the steps: S1: mixing a sticky material 4, an elastic material 5, and an inorganic filler to obtain a mixture; S2: subjecting the mixture to melting, extrusion, tape-casting, cooling and molding, pulling, and heat-treatment sequentially to obtain a flexible layer 2; and S3: applying a sticky layer 3 onto the flexible layer 2 to obtain an adhesive layer 10. According to some specific embodiments of this application, in step S2, the heat-treatment is performed at a temperature of 150 °C to 200 °C for a duration of 1 h to 2 h. The heat-treatment helps to eliminate stress. According to some embodiments of this application, a single-sided or double-sided silicone release paper/release film is affixed onto the other side of the sticky layer 3 in the adhesive layer 10, the side being oriented away from the flexible layer 2, thereby producing an adhesive layer 10 that is conveniently storable and processable.

In some embodiments, the electrochemical device according to this application includes any device in which an electrochemical reaction occurs. Specific examples of the electrochemical device include primary batteries or secondary batteries. In particular, the electrochemical device is a lithium secondary battery, including a lithium metal secondary battery, a lithium-ion secondary battery, a lithium polymer secondary battery, or a lithium-ion polymer secondary battery.

The adhesive layer in this application is applicable to electrochemical devices of different structures such as a jelly-roll lithium-ion battery, specifically, to lithium-ion batteries of a stacked structure, a multi-tab structure, or another structure, for example. The adhesive layer in this application is also applicable in different types of lithium-ion batteries such as a pouch-type lithium-ion battery, specifically, in a prismatic aluminum-shell battery, a cylindrical aluminum shell battery, or another type of lithium-ion battery, for example.

According to some embodiments of this application, the electrode assembly of this application includes a positive electrode, a negative electrode, and a separator. The electrochemical device of this application further includes an electrolyte solution.

## 1. Negative electrode

The material, composition, and manufacturing method of the negative electrode used in the electrochemical device of this application may include any technology disclosed in the prior art.

According to some embodiments of this application, the negative electrode includes a negative current collector and a negative active material layer disposed on at least one surface of the negative current collector.

According to some embodiments of this application, the negative active material layer includes a negative active material. The negative active material may include a material that enables reversible intercalation and deintercalation of lithium ions, lithium metal, lithium metal alloy, a material capable of being doped with or stripped of lithium, or transition metal oxide, for example, Si, and $SiO_x$ (0 < x < 2). The material that enables reversible intercalation and deintercalation of lithium ions may be a carbon material. The carbon material may be any carbon-based negative active material typically used in a lithium-ion rechargeable electrochemical device. Examples of the carbon material include crystalline carbon, non-crystalline carbon, and a combination thereof. The crystalline carbon may be amorphous or plate-shaped, mini-flake-shaped, spherical or fibrous natural graphite or artificial graphite. The non-crystalline carbon may be soft carbon, hard carbon, mesophase pitch carbonization products, fired coke, or the like. Both low crystalline carbon and high crystalline carbon may be used as carbon materials. Low crystalline carbon material typically include soft carbon and hard carbon. High crystalline carbon materials typically include natural graphite, crystalline graphite, pyrolytic carbon, mesophase pitch-based carbon fibers, mesophase carbon microbeads, mesophase pitch, or high-temperature calcined carbon (for example, petroleum, or coke derived from coal tar pitch).

According to some embodiments of this application, the negative active material layer includes a binder. The binder may include various binder polymers, including but not limited to, poly(vinylidene difluoride-co-hexafluoropropylene) abbreviated as poly(PVDF-co-HFP), polyvinylidene difluoride, polyacrylonitrile, polymethyl methacrylate, polyvinyl alcohol, carboxymethyl cellulose, hydroxypropyl cellulose, polyvinyl chloride, carboxylated polyvinyl chloride, polyvinyl fluoride, ethylene-oxide-containing polymer, polyvinylpyrrolidone, polyurethane, polytetrafluoroethylene, polyethylene, polypropylene, styrene-butadiene rubber, acrylated (or acrylate-esterified) styrene-butadiene rubber, epoxy resin, nylon, or the like.

According to some embodiments of this application, the negative active material layer further includes a conductive material to improve electrode conductivity. Any electrically conductive material may be used as the conductive material as long as the material does not cause chemical changes. Examples of the conductive material include: a carbon-based material (for example, natural graphite, artificial graphite, carbon black, acetylene black, Ketjen black, and carbon fiber), a metal-based material (for example, metal powder or metal fiber containing copper, nickel, aluminum, silver, and the like), a conductive polymer (for example, a polyphenylene derivative), and any mixture thereof. The current collector may be a copper foil, nickel foil, stainless steel foil, titanium foil, foamed nickel, foamed copper, a conductive-metal-clad polymer substrate, or any combination thereof.

## 2. Positive electrode

The material, composition, and manufacturing method of the positive electrode used in the electrochemical device of this application may include any technology disclosed in the prior art.

In some embodiments of this application, the positive active material includes, but is not limited to, a sulfide, a phosphate compound, and a lithium transition metal composite oxide. In some embodiments, the positive active material includes a lithium transition metal compound that assumes a structure in which lithium ions can be extracted and inserted.

In some embodiments, the positive electrode includes any composition disclosed in the prior art. In some embodiments, the positive electrode is made of a positive electrode material formed by applying a positive active material layer onto the current collector, where the positive active material layer includes a lithium transition metal-based compound powder and a binder.

In some embodiments, the positive active material layer is generally made by performing the following operations: dry-mixing the positive electrode material and the binder (as necessary, in addition to a conductive material, a thickener, and the like) and making the mixture into a sheet, and crimping the obtained sheet onto the positive current collector; or, dissolving or dispersing such materials into a liquid medium to form a slurry, coating the positive current collector with the slurry, and drying the slurry. In some embodiments, the positive active material layer includes any material disclosed in the prior art.

### 3. Separator

The material and the shape of the separator used in the electrochemical device of this application are not particularly limited herein, and may be based on any technology disclosed in the prior art. In some embodiments, the separator includes a polymer or an inorganic compound or the like formed from a material that is stable to the electrolyte solution disclosed in this application.

For example, the separator may include a substrate layer and a surface treatment layer. The substrate layer is a non-woven fabric, film or composite film, which, in each case, is of a porous structure. The material of the substrate layer is at least one selected from polyethylene, polypropylene, polyethylene terephthalate, and polyimide. Specifically, the material of the substrate layer may be a polypropylene porous film, a polyethylene porous film, a polypropylene non-woven fabric, a polyethylene non-woven fabric, or a polypropylene-polyethylene-polypropylene porous composite film.

The surface treatment layer is disposed on at least one surface of the substrate layer. The surface treatment layer may be a polymer layer or an inorganic compound layer, or a layer formed by mixing a polymer and an inorganic compound.

The inorganic compound layer includes inorganic particles and a binder. The inorganic particles are at least one selected from: aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is at least one selected from polyvinylidene fluoride, vinylidene fluoride-hexafluoropropylene copolymer, polyamide, polyacrylonitrile, polyacrylate, polyacrylic acid, polyacrylate, polyvinylpyrrolidone, polyvinyl alkoxide, poly methyl methacrylate, polytetrafluoroethylene, or polyhexafluoropropylene.

The polymer layer includes a polymer. The material of the polymer is at least one selected from polyamide, polyacrylonitrile, acrylate polymer, polyacrylic acid, polyacrylic acid sodium salt, polyvinylpyrrolidone, polyvinyl alkoxide, polyvinylidene difluoride, or poly(vinylidene fluoride-co-hexafluoropropylene).

### 4. Electrolyte solution

The composition and manufacturing method of the electrolyte solution used in the electrochemical device of this application may include any technology disclosed in the prior art.

In some embodiments, the electrolyte solution in the electrochemical device of this application includes a lithium salt and a nonaqueous solvent.

In some embodiments of this application, the lithium salt is at least one selected from $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, and lithium difluoroborate. For example, the lithium salt is $LiPF_6$ because it provides a high ionic conductivity and improves cycle properties.

The nonaqueous solvent may be a carbonate compound, a carboxylate compound, an ether compound, another organic solvent, or any combination thereof.

The carbonate compound may be a chain carbonate compound, a cyclic carbonate compound, a fluorocarbonate compound, or any combination thereof.

Examples of the chain carbonate compound are dimethyl carbonate (DMC), diethyl carbonate (DEC), dipropyl carbonate (DPC), methyl propyl carbonate (MPC), ethylene propyl carbonate (EPC), ethyl methyl carbonate (EMC), or any combination thereof. Examples of the cyclic carbonate compound are ethylene carbonate (EC), propylene carbonate (PC), butylene carbonate (BC), vinyl ethylene carbonate (VEC), or any combination thereof. Examples of the fluorocarbonate compound are fluoroethylene carbonate (FEC), 1, 2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or any combination thereof.

Examples of the carboxylate compound are methyl formate, methyl acetate, ethyl acetate, n-propyl acetate, tert-butyl acetate, methyl propionate, ethyl propionate, propyl propionate, γ-butyrolactone, decanolactone, valerolactone, mevalonolactone, caprolactone, or any combination thereof.

Examples of the ether compound are dibutyl ether, tetraglyme, diglyme, 1,2-dimethoxyethane, 1,2-diethoxyethane, ethoxy-methoxyethane, 2-methyltetrahydrofuran, tetrahydrofuran, or any combination thereof.

Examples of the other organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or any combination thereof.

**III. Electronic Device**

This application further provides an electronic device. The electronic device includes the electrochemical device according to the first aspect of this application.

The electronic device or apparatus according to this application is not particularly limited. In some embodiments, the electronic devices of this application include, but are not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household storage battery, or the like.

This application is further described below with reference to some embodiments. Understandably, such embodiments are merely intended to illustrate this application but not to limit the scope of this application.

**Test Methods**

1. Testing the dissolution rate

Soaking an adhesive layer in a lithium salt-free electrolyte solution, and ensuring that the lithium salt-free electrolyte solution completely submerges the adhesive layer. Soaking the adhesive layer at 60 °C for 7 days and then baking the adhesive layer at 85 °C for 7 days. Calculating the dissolution rate as: dissolution rate = (weight before soaking - weight after drying)/weight before soaking × 100%.

The organic solvent of the lithium salt-free electrolyte solution is: ethylene carbonate (EC), propylene carbonate (PC), diethyl carbonate (DEC), and ethyl propionate epoxy resin (EP), mixed at a mass ratio of EC: PC: DEC: EP = 3: 1: 3: 3.

2. Testing the bonding force

Testing the bonding force of the adhesive layer bonded to an aluminum foil and an outer pocket by using a GoTech tensile machine by a 180° angle method, as detailed below:

(1) sticking the sticky layer of the adhesive layer onto the aluminum foil, directing the flexible layer toward the outer pocket, and cutting the adhesive layer into strip specimens of 20 mm × 60 mm in size, where the length and width of the specimen may be adjusted proportionally according to the actual situation.

(2) Hot-pressing the specimen at 85 °C under a pressure of 1 MPa for 40 min, and then soaking the specimen in the electrolyte solution, and then bonding the aluminum foil side of the specimen to a steel sheet by use of double-sided tape along the length direction of the specimen, where the bonding length is not less than 40 mm.

(3) Fixing the steel sheet to a corresponding position of the GoTech tensile machine, and pulling up the other end of the specimen, where the other end is not bonded to the steel sheet. Putting the electrode plate specimen into a collet directly or by means of a connector to clamp the specimen. Leaving the pulled-up part of the specimen to be spatially at an 180° angle to the steel sheet. Letting the collet pull the specimen at a speed of 50□0.2 mm/min, and finally, using an average value of the tensile forces in a flat and steady region as the bonding force.

The organic solvent of the electrolyte solution is: ethylene carbonate (EC), propylene carbonate (PC), diethyl carbonate (DEC), and ethyl propionate epoxy resin (EP), mixed at a mass ratio of EC: PC: DEC: EP = 3: 1: 3: 3. The solute is lithium hexafluorophosphate (LiPF$_6$), and the concentration of LiPF$_6$ is 1 mol/L.

3. Testing the tensile strength and break-elongation rate

Testing the tensile strength and break-elongation rate by using a universal tensile tester (also known as a universal material testing machine or a tensile tester). The electronic universal tensile tester complies with the standards such as GB/T1040, 1041, 8804, 9341, 9647, ISO7500-1, GB16491, GB/T17200, ISO5893, ASTMD638, 695, 790, and plastic pipe standards.

The break-elongation rate means an elongation rate of a material subjected to a maximum stress by which the material breaks off. Test procedure:

Preparing a specimen: making a specimen that is 15 mm in width and at least 150 mm in length, ensuring that the gauge length is 100 mm. For a specimen material that deforms greatly, the gauge length is not less than 50 mm. The test speed is 500±30 mm/min. The specimen is clamped in the following way: fitting the specimen into two jigs of the testing machine so that the longitudinal axis of the specimen coincides with the connection line of the centers of the upper jig and the lower jig; and applying an appropriate clamping force of the jigs.

Fitting and clamping the specimen between the two collets of the jigs, letting the two collets make relative movement, and collecting the values of the force changes and displacement changes during the test through a force sensor located on the movable collet and a displacement sensor built in the machine, so as to obtain the tensile strength, break-elongation rate, and other performance metrics of the specimen.

$$\text{Elastic modulus (MPa)} = \text{tensile strength (MPa)/break-elongation rate (\%)}.$$

4. Ball drop impact test

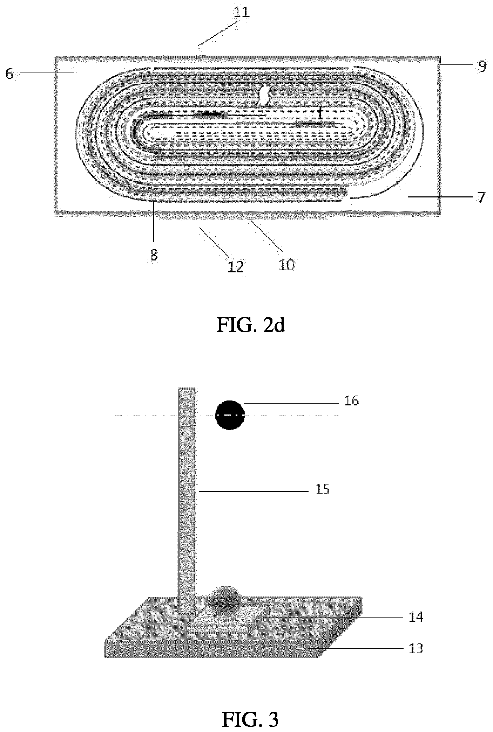

Performing the ball drop impact test by using a ball drop impact tester shown in FIG. 3 (model: TT-2116-A, manufacturer: Shenzhen Tongtai Testing Equipment Co., Ltd.).

Placing the specimen horizontally on a hard platform. Dropping a 50 g standard steel ball freely without an initial velocity from a height of 20 cm onto the center region of the specimen. Removing the ball immediately after the impact, circling the impacted position with a pen, measuring the thickness at the impacted positions in groups, where each group is tested for 3 times at an interval of 2 to 3 seconds. Measuring the thickness at the impacted positions in groups 1 hour after impact, where each group is tested for 3 times.

Calculating the impact-induced thickness change rate as: impact-induced thickness change rate = (thickness before impact - thickness after impact)/thickness before impact (%).

Calculating the thickness recovery rate 1 hour after impact as: thickness recovery rate = (thickness 1 hour after impact - thickness after impact)/thickness after impact (%).

5. Heavy impact test

Performing a heavy impact test on a prepared battery according to the following steps:

a) Full charge: Charging the battery at a constant current of 1.5C at a temperature of 20±5 °C until the voltage reaches 4.45 V, and then charging the battery at a constant voltage until the current drops to 0.02C, and recording the OCV and IMP and taking photos.

b) Putting a round rod with a diameter of φ15.8±0.1 mm at a center position on the battery cell (in a direction perpendicular to the current collector);

c) Dropping 9.1±0.1 kg hammer vertically in a free state from a height that is 61±2.5 cm distant from the round rod.

d) Stopping the test when data has been acquired for 5 minutes or when the surface temperature of the battery cell drops to 50 °C or below, and recording the OCV and IMP and taking photos.

Determining pass of the test if no fire or explosion occurs.

6. Lateral extrusion test

Performing a lateral extrusion test on a prepared battery according to the following steps:

a) Charging the battery at a constant current of 0.5C until the voltage reaches 4.45 V, and then charging the battery at a constant voltage until the current drops to 0.02 C.

b) Applying a special-purpose lateral extrusion jig (including an extrusion head and a bottom plate) for the test.

c) Adjusting a clearance between the extrusion head and bottom plate to approximately 0.3 mm, setting the extrusion speed to 150 mm/min, and setting the thickness of the battery cell 4.85 mm.

d) Monitoring the voltage and temperature data during the test, and acquiring data for 2 minutes at an accuracy 10 ms.

e) Testing 20 points on the aluminum foil side of the current collector and on the nickel foil side of the current collector separately.

f) Recording the OCV and IMP upon completion of the test, checking the appearance and taking photos.

Determining pass of the test if no fire or explosion occurs.

**Embodiments and Comparative Embodiments**

1. Preparing an adhesive layer

Step a: Preparing a flexible layer: (1) feeding materials: mixing a sticky material, an elastic material, an inorganic filler, and other feedstocks at the ratio specified in Table 1, melting the mixture, and conveying the melted product to an extrusion system; (2) melting, extruding, and tape-casting: melting and plasticizing the pretreated feedstocks in the extrusion system, and then extruding a molten material out of a die head, and tape-casting the molten material to form a thin film; (3) cooling and molding: cooling and molding the thin film at a temperature of 50 °C to 100 °C through a cooling roller; (4) pulling: pulling the thin film with a conveyor belt to obtain a flexible layer of a specified thickness; (5) heat-treating: heat-treating the thin film at a temperature of 150 °C to 200 °C for 1 hour to eliminate stress and obtain a flexible layer.

Step b: Applying a sticky layer of a specified thickness onto one side of the flexible layer obtained in step a, so as to obtain the adhesive layer.

2. Preparing a positive electrode plate:

Mixing lithium cobalt oxide as a positive active material, acetylene black, and polyvinylidene difluoride (PVDF) at a mass ratio of 94: 3: 3, adding N-methylpyrrolidone (NMP) as a solvent, blending the mixture to form a slurry with a solid content of 75%, and stirring well. Applying the slurry onto the positive current collector aluminum foil evenly, and drying the aluminum foil at 90 °C. Cold-pressing the foil to obtain a positive electrode plate coated with a 100 $\mu$m-thick positive active material layer. Subsequently, repeating the foregoing steps on the other surface of the positive electrode plate to obtain a positive electrode plate coated with the positive active material layer on both sides. Cutting the positive electrode plate into a size of 74 mm $\times$ 867 mm, welding tabs, and leaving the positive electrode plate ready for future use.

3. Preparing a negative electrode plate

Mixing artificial graphite as a negative active material, acetylene black, styrene butadiene rubber, and sodium carboxymethyl cellulose at a mass ratio of 96: 1: 1.5: 1.5, adding deionized water as a solvent to formulate a slurry in which the solid content is 70%, and stirring the slurry well. Applying the slurry onto the copper foil evenly, and oven-drying the foil at 110 °C. Cold-pressing the foil to obtain a negative electrode plate coated with a 150 $\mu$m-thick negative active material layer on a single side. Subsequently, repeating the foregoing coating step on the other surface of the negative electrode plate to obtain a negative electrode plate coated with the negative active material layer on both sides. Cutting the negative electrode plate into a size of 74 mm $\times$ 867 mm, welding tabs, and leaving the negative electrode plate ready for use.

4. Preparing a separator: Using a PE film as a separator.

5. Preparing an electrolyte solution

Preparing an electrolyte solution by using the following organic solvent: ethylene carbonate (EC), propylene carbonate (PC), diethyl carbonate (DEC), and ethyl propionate epoxy resin (EP), mixed at a mass ratio of EC: PC: DEC: EP = 3: 1: 3: 3. The solute is lithium hexafluorophosphate ($LiPF_6$), and the concentration of $LiPF_6$ is 1 mol/L.

6. Preparing an electrode assembly

Stacking the positive electrode plate, the separator, and the negative electrode plate sequentially, and winding the stacked structure to obtain an electrode assembly. Affixing adhesive tape or the adhesive layer prepared herein to the surface of the main body of the electrode assembly to form a battery cell.

7. Preparing a battery: Affixing the adhesive layer prepared herein to the surface of the main body of the electrode assembly, and fitting the electrode assembly with the adhesive layer into an outer pocket or shell, and performing steps such as top- and-side sealing, vacuum-baking, electrolyte injection, chemical formation, capacity grading, and degassing to form a prismatic pouch-type lithium-ion polymer battery of 5.2 mm (thickness) $\times$ 63 mm (width) $\times$ 76 mm (height) in size.

In Table 1, Embodiments 1 to 10 show how the content and type of the sticky materials in the flexible layer of the adhesive layer affect the performance of the prepared lithium-ion battery. As can be seen from Embodiments 1 to 7 in Table 1, with the increase in the content of the sticky materials, the break-elongation rate of the flexible layer increases, and the elastic modulus decreases, indicating that the flexibility of the flexible layer is higher. The lateral extrusion test pass rate of the battery is up to 100%, and the heavy impact test pass rate is improved significantly. When the content of the sticky materials is higher than 90%, the content of the elastic material is relatively low, the buffering effect declines to some extent, and an external force that is large enough can "break through" the adhesive layer and do work directly on the battery cell, thereby being detrimental to the safety of the battery cell. As can be seen from Embodiments 8 to 10 in Table 1, different types of sticky materials such as polypropylene, poly(1,3-butadiene), and polycarbonate can meet the requirements. The three types of sticky materials make no difference in terms of effect, and contribute to a high level of lateral extrusion test pass rate and heavy impact test pass rate.

In Table 1, Embodiments 11 to 18 show how the content and type of the elastic materials in the flexible layer of the adhesive layer affect the performance of the prepared lithium-ion battery. As can be seen from Embodiments 11 to 14 in Table 1, the content of the elastic material falling within the preferred range of 15% to 20% contributes to achieving a high level of lateral extrusion test pass rate and heavy impact test pass rate. As can be seen from Embodiments 15 to 18 in Table 1, different types of elastic materials such as poly(styrene-b-butadiene-b-styrene), poly(styrene-b-ethylene-b-butylene-b-styrene), polybutadiene, or polyisobutylene can meet the requirements. The four types of elastic materials almost make no difference in terms of effect, and contribute to a high level of lateral extrusion test pass rate and heavy impact test pass rate.

In Table 1, Embodiments 19 to 22 show how the type of the inorganic fillers in the flexible layer of the adhesive layer affects the performance of the prepared lithium-ion battery. As can be seen from Embodiments 19 to 22 in Table 1, the inorganic fillers increase the strength of the adhesive layer. Different types of inorganic fillers such as titanium dioxide powder, aluminum oxide, calcium sulfate, and barium sulfate can meet the requirements. The four types of inorganic fillers almost make no difference in terms of effect, and contribute to a high level of lateral extrusion test pass rate and heavy impact test pass rate.

In Table 1, Embodiments 23 to 27 show how the thickness of the flexible layer of the adhesive layer affects the performance of the prepared lithium-ion battery. As can be seen from Embodiments 23 to 27 in Table 1, the greater the thickness of the flexible layer, the greater the bonding force, and the stronger the buffering effect against an external impact stress, thereby improving the lateral extrusion test pass rate and the heavy impact test pass rate. It is hereby noted that the increased thickness gives rise to a loss of the energy density of the electrochemical device, and an appropriate thickness needs to be selected in practical applications by taking the whole into consideration.

In Table 1, Embodiments 28 to 30 show how the type of the material of the sticky layer in the adhesive layer affects the performance of the prepared lithium-ion battery. As can be seen from Embodiments 28 to 30 in Table 1, the sticky layer made of different types of materials such as polymethyl methacrylate, polypropylene, and hot-melt SIS rubber can meet the requirements. The three types of materials almost make no difference in terms of effect, and contribute to a high level of lateral extrusion test pass rate and heavy impact test pass rate.

In Table 1, Embodiments 31 to 33 show how the thickness of the sticky layer of the adhesive layer affects the performance of the prepared lithium-ion battery. As can be seen from Embodiments 31 to 33 in Table 1, the greater the thickness of the sticky layer, the greater the bonding force. However, because the buffering effect of the sticky layer against an external impact is low, the sticky layer does not significantly improve the lateral extrusion test pass rate or the heavy impact test pass rate.

In Table 1, Embodiments 34 to 37 show how the bonding area between the adhesive layer and the electrode affects the performance of the prepared lithium-ion battery. As can be seen from Embodiments 34 to 37 in Table 1, the larger the bonding area between the adhesive layer and the electrode, the higher the lateral extrusion test pass rate and the heavy impact test pass rate.

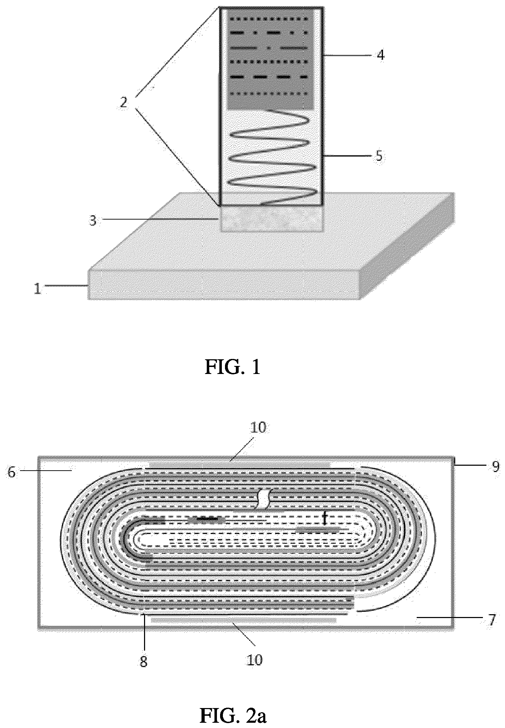

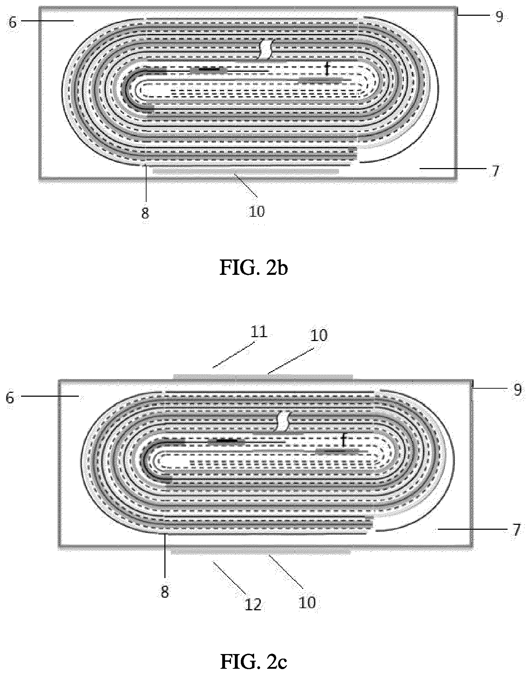

In Table 1, Embodiments 38 to 40 show how the affixing position of the adhesive layer affects the performance of the prepared lithium-ion battery. As can be seen from Embodiments 38 to 40 in Table 1, the adhesive layer affixed to both sides contributes to a higher level of lateral extrusion test pass rate and heavy impact test pass rate than the adhesive layer affixed to a single side, and the adhesive layer affixed to both sides can contribute to a 100% pass rate. In addition, the affixing position almost exerts no effect on the lateral extrusion test pass rate and the heavy impact test pass rate. Affixing the adhesive layer to both sides of the main body of the electrode assembly contributes to the same effect as affixing the adhesive layer to both sides of the main body of the shell, indicating that the adhesive layer contributes to high flexibility and a high cushioning effect regardless of whether an electrolyte solution exists in the environment. As shown in FIG. 2a to FIG. 2d, affixing the adhesive layer to both sides of the main body of the electrode assembly means that the adhesive layer is disposed on surfaces of the electrode assembly, where the surfaces correspond to the shallow pit side and the deep pit side, respectively, inside the outer pocket or shell (FIG. 2a). Affixing the adhesive layer to a single side of the main body of the electrode assembly means that the adhesive layer is disposed on a surface of the electrode assembly, where the surface corresponds to the shallow pit side or the deep pit side inside the outer pocket or shell (FIG. 2b). Affixing the adhesive layer to both sides of the main body of the shell means that the adhesive layer is disposed on both the front and the back of the outer surface of the shell or outer pocket (FIG. 2a).

Affixing the adhesive layer to a single side of the main body of the shell means that the adhesive layer is disposed on the front or back of the outer surface of the shell or outer pocket (FIG. 2d).

Comparative Embodiments 1 to 3 employ an adhesive tape made of a PET substrate. Consequently, the break-elongation rate is low, the elastic modulus is large, the flexibility is poor, the cushioning effect is poor, and resilience is lacking. Therefore, the lateral extrusion test pass rate and the heavy impact test pass rate are low. Even if the thickness of the adhesive tape is increased, the lateral extrusion test pass rate and the heavy impact test pass rate are still very low, and fail to meet the safety performance requirements of the electrochemical device.

Table 1

| | Adhesive layer | | | | | | Bonding area between adhesive layer and electrode | Affixing position of adhesive layer | Bonding force (N/mm) | Break-elongation rate | Elastic modulus E (MPa) | Impact-induced thickness change rate | Thickness recovery rate of adhesive layer 1 h after impact | Dissolution rate of electrolyte solution | Lateral extrusion test pass rate | | Heavy impact test pass rate |
| | Flexible layer | | | | Sticky layer | | | | | | | | | | Al foil side of current collector | Ni foil side of current collector | |
| | Sticky material | Elastic material | Inorganic filler | Thickness (μm) | Constituents | Thickness (μm) | | | | | | | | | | | |
| Embodiment 1 | 60% cast polypropylene | 37% poly (ethylene-co-vinyl acetate) | 3% titanium dioxide powder | 20 | Polymethyl methacrylate | 5 | 80% | Single side of main body of electrode assembly | 0.246 | 69.7% | 101.2 | 13.2% | 6.80% | 10.12% | 65% | 55% | 30% |
| Embodiment 2 | 70% cast polypropylene | 29% poly (ethylene-co-vinyl acetate) | 1 % titanium dioxide powder | 20 | Polymethyl methacrylate | 5 | 80% | Single side of main body of electrode assembly | 0.231 | 118.6% | 93.5 | 24.30% | 27.40% | 7.37% | 90% | 95% | 55% |
| Embodiments | 75% cast polypropylene | 24% poly (ethylene-co-vinyl acetate) | 1 % titanium dioxide powder | 20 | Polymethyl methacrylate | 5 | 80% | Single side of main body of electrode assembly | 0.244 | 213.8% | 70.2 | 27.12% | 23.58% | 7.46% | 90% | 100% | 65% |

| | Adhesive layer | | | | | | Bonding area between adhesive layer and electrode | Affixing position of adhesive layer | Bonding force (N/mm) | Break-elongation rate | Elastic modulus E (MPa) | Impact-induced thickness change rate | Thickness recovery rate of adhesive layer 1 h after impact | Dissolution rate of electrolyte solution | Lateral extrusion test pass rate | | Heavy impact test pass rate |
| | Flexible layer | | | | Sticky layer | | | | | | | | | | Al foil side of current collector | Ni foil side of current collector | |
| | Sticky material | Elastic material | Inorganic filler | Thickness (μm) | Constituents | Thickness (μm) | | | | | | | | | | | |
| Embodiment 4 | 85% cast polypropylene | 14% poly (ethylene-co-vinyl acetate) | 1 % titanium dioxide powder | 20 | Polymethyl methacrylate | 5 | 80% | Single side of main body of electrode assembly | 0.257 | 366.5% | 45.8 | 26.00% | 18.20% | 6.98% | 100% | 100% | 85% |
| Embodiment 5 | 90% cast polypropylene | 9% poly(ethylene-co-vinyl acetate) | 1 % titanium dioxide powder | 20 | Polymethyl methacrylate | 5 | 80% | Single side of main body of electrode assembly | 0.283 | 465.7% | 25.5 | 19.32% | 12.21% | 6.45% | 100% | 100% | 90% |
| Embodiment 6 | 95% cast polypropylene | 4% poly(ethylene-co-vinyl acetate) | 1 % titanium dioxide powder | 20 | Polymethyl methacrylate | 5 | 80% | Single side of main body of electrode assembly | 0.354 | 620.8% | 4.62 | 15.00% | 2.40% | 7.13% | 100% | 100% | 85% |

(continued)

| | Adhesive layer | | | | | | Bonding area between adhesive layer and electrode | Affixing position of adhesive layer | Bonding force (N/mm) | Break-elongation rate | Elastic modulus E (MPa) | Impact-induced thickness change rate | Thickness recovery rate of adhesive layer 1 h after impact | Dissolution rate of electrolyte solution | Lateral extrusion test pass rate | | Heavy impact test pass rate |
| | Flexible layer | | | | Sticky layer | | | | | | | | | | Al foil side of current collector | Ni foil side of current collector | |
| | Sticky material | Elastic material | Inorganic filler | Thickness (μm) | Constituents | Thickness (μm) | | | | | | | | | | | |
| Embodiment 7 | 100% cast polypropylene | \ | \ | 20 | Polymethyl methacrylate | 5 | 80% | Single side of main body of electrode assembly | 0.251 | 831.596 | 1.9 | 10.01% | 2.40% | 8.25% | 70% | 45% | 30% |
| Embodiment 8 | 80% cast polypropylene | 15% poly (ethylene-co-vinyl acetate) | 5% titanium dioxide powder | 20 | Polymethyl methacrylate | 5 | 80% | Single side of main body of electrode assembly | 0.251 | 300.5% | 58.2 | 25.40% | 18.54% | 6.56% | 95% | 100% | 85% |
| Embdiment 9 | 80% poly (1,3-butadiene) | 15% poly (ethylene-co-vinyl acetate) | 5% titanium dioxide powder | 20 | Polymethyl methacrylate | 5 | 80% | Single side of main body of electrode assembly | 0.249 | 315.5% | 61.1 | 24.90% | 18.71% | 6.23% | 100% | 100% | 80% |

(continued)

| | Adhesive layer | | | | | | Bonding area between adhesive layer and electrode | Affixing position of adhesive layer | Bonding force (N/mm) | Break-elongation rate | Elastic modulus E (MPa) | Impact-induced thickness change rate | Thickness recovery rate of adhesive layer 1 h after impact | Dissolution rate of electrolyte of electrolyte solution | Lateral extrusion test pass rate | | Heavy impact test pass rate |
| | Flexible layer | | | | Sticky layer | | | | | | | | | | Al foil side of current collector | Ni foil side of current collector | |
| | Sticky material | Elastic material | Inorganic filler | Thickness (μm) | Constituents | Thickness (μm) | | | | | | | | | | | |
| Embodiment 10 | 80% polycarbonate | 15% poly(ethylene-co-vinyl acetate) | 5% titanium dioxide powder | 20 | Polymethyl methacrylate | 5 | 80% | Single side of main body of electrode assembly | 0.253 | 347.196 | 57.5 | 26.30% | 18.48% | 6.40% | 100% | 100% | 85% |
| Embodiment 11 | 80% cast polypropylene | 1996 poly(ethylene-co-vinyl acetate) | 1% titanium dioxide powder | 20 | Polymethyl methacrylate | 5 | 80% | Single side of main body of electrode assembly | 0.245 | 381.2% | 58.3 | 27.20% | 20.72% | 7.36% | 100% | 100% | 80% |
| Embodiment 12 | 80% cast polypropylene | 1896 poly(ethylene-co-vinyl acetate) | 2% titanium dioxide powder | 20 | Polymethyl methacrylate | 5 | 80% | Single side of main body of electrode assembly | 0.248 | 376.5% | 57.6 | 23.90% | 19.34% | 6.77% | 100% | 100% | 80% |

| | Adhesive layer | | | | | | Bonding area be-tween adhe-sive lay-er and elec-trode | Affixing position of adhe-sive lay-er | Bond-ing force (N/mm) | Break-elonga-tion rate | Elastic modu-lus E (MPa) | Impact-induced thick-ness change rate | Thick-ness re-covery rate of adhe-sive lay-er 1 h af-ter impact | Dissolu-tion rate of elec-trolyte solution | Lateral extru-sion test pass rate | | Heav y im-pact test pass rate |
| | Flexible layer | | | | Sticky layer | | | | | | | | | | Al foil side of current collector | Ni foil side of current collec-tor | |
| | Sticky ma-terial | Elastic ma-terial | Inorgan-ic filler | Thick-ness (μm) | Constitu-ents | Thick-ness (μm) | | | | | | | | | | | |
| Embodi-mont 13 | 80% cast polypropyl-ene | 17% poly (ethylene-co-vinyl ace-tate) | 3% tita-nium di-oxide powder | 20 | Polymethyl methacr-ylate | 5 | 80% | Single side of main body of elec-trode assem-bly | 0.247 | 361.8% | 58.5 | 21.80% | 18.08% | 6.42% | 100% | 100% | 85% |
| Embodi-ment 14 | 80% cast polypropyl-ene | 1696 poly (ethylene-co-vinyl ace-tate) | 4% tita-nium di-oxide powder | 20 | Polymethyl methacr-ylate | 5 | 80% | Single side of main body of elec-trode assem-bly | 0.250 | 357.3% | 57.9 | 24.10% | 17.79% | 6.17% | 100% | 100% | 80% |
| Embodi-ment 15 | 80% cast polypropyl-ene | 17% poly (styrene-b-butadiene-b-styrene) | 3% tita-nium di-oxide powder | 20 | Polymethyl methacr-ylate | 5 | 80% | Single side of main body of elec-trode assem-bly | 0.251 | 356.9% | 58.3 | 27.50% | 19.34% | 6.21% | 100% | 100% | 90% |

20

EP 4 425 635 A1

(continued)

| | Adhesive layer | | | | | | Bonding area between adhesive layer and electrode | Affixing position of adhesive layer | Bonding force (N/mm) | Break-elongation rate | Elastic modulus E (MPa) | Impact-induced thickness change rate | Thickness recovery rate of adhesive layer 1 h after impact | Dissolution rate of electrolyte solution | Lateral extrusion test pass rate | | Heavy impact test pass rate |
| | Flexible layer | | | | Sticky layer | | | | | | | | | | | | |
| | Sticky material | Elastic material | Inorganic filler | Thickness (μm) | Constituents | Thickness (μm) | | | | | | | | | Al foil side of current collector | Ni foil side of current collector | |
| Embodiment 16 | 80% cast polypropylene | 17% poly (styrene-b-ethylene-b-butene-b-styrene) | 3% titanium dioxide powder | 20 | Polymethyl methacrylate | 5 | 80% | Single side of main body of electrode assembly | 0.245 | 361.5% | 58.1 | 26.30% | 19.78% | 5.98% | 100% | 95% | 85% |
| Embodiment 17 | 80% cast polypropylene | 17% polybutadiene | 3% titanium dioxide powder | 20 | Polymethyl methacrylate | 5 | 80% | Single side of main body of electrode assembly | 0.248 | 349.9% | 57.5 | 25.90% | 20.04% | 6.05% | 100% | 100% | 90% |
| Embodiment 18 | 80% cast polypropylene | 17% polyisobutylene | 3% titanium dioxide powder | 20 | Polymethyl methacrylate | 5 | 80% | Single side of main body of electrode assembly | 0.253 | 365.8% | 60.4 | 27.40% | 19.52% | 6.45% | 100% | 100% | 85% |

(continued)

| | Adhesive layer | | | | | | Bonding area between adhesive layer and electrode | Affixing position of adhesive layer | Bonding force (N/mm) | Breaking elongation rate | Elastic modulus E (MPa) | Impact-induced thickness change rate | Thickness recovery rate of adhesive layer 1 h after impact | Dissolution rate of electrolyte solution | Lateral extrusion test pass rate | | Heavy impact test pass rate |
| | Flexible layer | | | Sticky layer | | | | | | | | | | | Al foil side of current collector | Ni foil side of current collector | |
| | Sticky material | Elastic material | Inorganic filler | Thickness (μm) | Constituents | Thickness (μm) | | | | | | | | | | | |
| Embodiment 19 | 80% cast polypropylene | 17.5% poly (ethylene-co-vinyl acetate) EVA | 2.5% titanium dioxide powder | 20 | Polymethyl methacrylate | 5 | 80% | Single side of main body of electrode assembly | 0.252 | 366.5% | 57.6 | 26.00% | 18.96% | 6.98% | 100% | 100% | 85% |
| Embodiment 20 | 80% cast polypropylene | 17.5% poly (ethylene-co-vinyl acetate) EVA | 2.5% aluminum oxide | 20 | Polymethyl methacrylate | 5 | 80% | Single side of main body of electrode assembly | 0.249 | 387.9% | 59.5 | 20.01% | 19.16% | 6.73% | 100% | 100% | 90% |
| Embodiment 21 | 80% cast polypropylene | 17.5% poly (ethylene-co-vinyl acetate) EVA | 2.5% calcium sulfate | 20 | Polymethyl methacrylate | 5 | 80% | Single side of main body of electrode assembly | 0.253 | 375.0% | 57.8 | 27.78% | 20.11% | 6.05% | 100% | 100% | 95% |

| | Adhesive layer | | | | | | Bonding area between adhesive layer and electrode | Affixing position of adhesive layer | Bonding force (N/mm) | Break-elongation rate | Elastic modulus E (MPa) | Impact-induced thickness change rate | Thickness recovery rate of adhesive layer 1 h after impact | Dissolution rate of electrolyte solution | Lateral extrusion test pass rate | | Heavy impact test pass rate |
| | Flexible layer | | | | Sticky layer | | | | | | | | | | Al foil side of current collector | Ni foil side of current collector | |
| | Sticky material | Elastic material | Inorganic filler | Thickness (μm) | Constituents | Thickness (μm) | | | | | | | | | | | |
| Embodiment 22 | 80% cast polypropylene | 17.5% poly(ethylene-co-vinyl acetate) EVA | 2.5% barium sulfate | 20 | Polymethyl methacrylate | 5 | 80% | Single side of main body of electrode assembly | 0.246 | 358.0% | 61.3 | 24.76% | 21.05% | 6.31% | 100% | 100% | 95% |
| Embodiment 23 | 80% cast polypropylene | 17% poly(ethylene-co-vinyl acetate) | 3% titanium dioxide powder | 12 | Polymethyl methacrylate | 5 | 80% | Single side of main body of electrode assembly | 0.149 | 342.8% | 60.6 | 28.25% | 18.75% | 6.64% | 95% | 95% | 85% |
| Embodiment 24 | 80% cast polypropylene | 17% poly(ethylene-co-vinyl acetate) | 3% titanium dioxide powder | 18 | Polymethyl methacrylate | 5 | 80% | Single side of main body of electrode assembly | 0.204 | 356.3% | 58.2 | 26.30% | 19.42% | 6.85% | 100% | 100% | 90% |

| | Adhesive layer | | | | | | Bonding area between adhesive layer and electrode | Affixing position of adhesive layer | Bonding force (N/mm) | Break-elongation rate | Elastic modulus E (MPa) | Impact-induced thickness change rate | Thickness recovery rate of adhesive layer 1 h after impact | Dissolution rate of electrolyte solution | Lateral extrusion test pass rate | | Heavy impact test pass rate |
| | Flexible layer | | | | Sticky layer | | | | | | | | | | Al foil side of current collector | Ni foil side of current collector | |
| | Sticky material | Elastic material | Inorganic filler | Thickness (μm) | Constituents | Thickness (μm) | | | | | | | | | | | |
| Embodiment 25 | 80% cast polypropylene | 17% poly(ethylene-co-vinyl acetate) | 3% titanium dioxide powder | 24 | Polymethyl methacrylate | 5 | 80% | Single side of main body of electrode assembly | 0.312 | 363.8% | 57.7 | 26.90% | 18.80% | 7.03% | 100% | 100% | 90% |
| Embodiment 26 | 80% cast polypropylene | 17% poly(ethylene-co-vinyl acetate) | 3% titanium dioxide powder | 30 | Polymethyl methacrylate | 5 | 80% | Single side of main body of electrode assembly | 0.465 | 349.6% | 58.4 | 28.30% | 19.23% | 6.68% | 100% | 100% | 95% |
| Embodiment 27 | 80% cast polypropylene | 17% poly(ethylene-co-vinyl acetate) | 3% titanium dioxide powder | 42 | Polymethyl methacrylate | 5 | 80% | Single side of main body of electrode assembly | 0.642 | 351.5% | 60.8 | 27.50% | 19.21% | 6.41% | 100% | 100% | 100% |

24

| | Adhesive layer | | | | | | Bonding area between adhesive layer and electrode | Affixing position of adhesive layer | Bonding force (N/mm) | Break-elongation rate | Elastic modulus E (MPa) | Impact-induced thickness change rate | Thickness recovery rate of adhesive layer 1 h after impact | Dissolution rate of electrolyte solution | Lateral extrusion test pass rate | | Heavy impact test pass rate |
| | Flexible layer | | | | Sticky layer | | | | | | | | | | Al foil side of current collector | Ni foil side of current collector | |
| | Sticky material | Elastic material | Inorganic filler | Thickness (μm) | Constituents | Thickness (μm) | | | | | | | | | | | |
| Embodiment 28 | 80% cast polypropylene | 17% poly (ethylene-co-vinyl acetate) | 3% titanium dioxide powder | 20 | Polymethyl methacrylate | 5 | 80% | Single side of main body of electrode assembly | 0.255 | 357.3% | 59.5 | 28.37% | 19.67% | 6.02% | 100% | 100% | 90% |
| Embodiment 29 | 80% cast polypropylene | 17% poly (ethylene-co-vinyl acetate) | 3% titanium dioxide powder | 20 | Polypropylene | 5 | 80% | Single side of main body of electrode assembly | 0.247 | 364.2% | 61.5 | 26.70% | 18.60% | 6.45% | 100% | 100% | 90% |
| Embodiment 30 | 80% cast polypropylene | 17% poly (ethylene-co-vinyl acetate) | 3% titanium dioxide powder | 20 | Hot-melt SIS rubber | 5 | 80% | Single side of main body of electrode assembly | 0.251 | 348.5% | 58.2 | 29.54% | 18.96% | 6.47% | 100% | 100% | 85% |

(continued)

EP 4 425 635 A1

| | Adhesive layer | | | | | | Bonding area between adhesive layer and electrode | Affixing position of adhesive layer | Bonding force (N/mm) | Break-elongation rate | Elastic modulus E (MPa) | Impact-induced thickness change rate | Thickness recovery rate of adhesive layer 1 h after impact | Dissolution rate of electrolyte solution | Lateral extrusion test pass rate | | Heavy impact test pass rate |
| | Flexible layer | | | | Sticky layer | | | | | | | | | | Al foil side of current collector | Ni foil side of current collector | |
| | Sticky material | Elastic material | Inorganic filler | Thickness (μm) | Constituents | Thickness (μm) | | | | | | | | | | | |
| Embodiment 31 | 80% cast polypropylene | 17% poly(ethylene-co-vinyl acetate) | 3% titanium dioxide powder | 20 | Polymethyl methacrylate | 3 | 80% | Single side of main body of electrode assembly | 0.152 | 342.6% | 59.2 | 26.30% | 19.35% | 6.21% | 100% | 100% | 85% |
| Embodiment 32 | 80% cast polypropylene | 17% poly(ethylene-co-vinyl acetate) | 3% titanium dioxide powder | 20 | Polymethyl methacrylate | 5.5 | 80% | Single side of main body of electrode assembly | 0.256 | 352.8% | 60.7 | 28.30% | 18.45% | 6.55% | 100% | 100% | 85% |
| Embodiment 33 | 80% cast polypropylene | 17% poly(ethylene-co-vinyl acetate) | 3% titanium dioxide powder | 20 | Polymethyl methacrylate | 8 | 80% | Single side of main body of electrode assembly | 0.368 | 354.796 | 61.6 | 27.45% | 19.86% | 6.30% | 100% | 100% | 90% |

(continued)

| | Adhesive layer | | | | | | Bonding area between adhesive layer and electrode | Affixing position of adhesive layer | Bonding force (N/mm) | Breaking elongation rate | Elastic modulus E (MPa) | Impact-induced thickness change rate | Thickness recovery rate of adhesive layer 1 h after impact | Dissolution rate of electrolyte solution | Lateral extrusion test pass rate | | Heavy impact test pass rate |
| | Flexible layer | | | | Sticky layer | | | | | | | | | | Al foil side of current collector | Ni foil side of current collector | |
| | Sticky material | Elastic material | Inorganic filler | Thickness (μm) | Constituents | Thickness (μm) | | | | | | | | | | | |
| Embodiment 34 | 80% cast polypropylene | 17% poly(ethylene-co-vinyl acetate) | 3% titanium dioxide powder | 20 | Polymethyl methacrylate | 5 | 20% | Single side of main body of electrode assembly | 0.257 | 363.8% | 59.5 | 25.80% | 19.37% | 6.37% | 80% | 80% | 75% |
| Embodiment 35 | 80% cast polypropylene | 17% poly(ethylene-co-vinyl acetate) | 3% titanium dioxide powder | 20 | Polymethyl methacrylate | 5 | 40% | Single side of main body of electrode assembly | 0.258 | 371.9% | 59.8 | 26.10% | 19.56% | 6.08% | 90% | 85% | 85% |
| Embodiment 36 | 80% cast polypropylene | 17% poly(ethylene-co-vinyl acetate) | 3% titanium dioxide powder | 20 | Polymethyl methacrylate | 5 | 60% | Single side of main body of electrode assembly | 0.249 | 365.3% | 58.4 | 26.70% | 18.95% | 5.99% | 95% | 95% | 90% |

(continued)

| | Adhesive layer | | | | | | Bonding area between adhesive layer and electrode | Affixing position of adhesive layer | Bonding force (N/mm) | Breaking elongation rate | Elastic modulus E (MPa) | Impact-induced thickness change rate | Thickness recovery rate of adhesive layer 1 h after impact | Dissolution rate of electrolyte solution | Lateral extrusion test pass rate | | Heavy impact test pass rate |
|---|---|---|---|---|---|---|---|---|---|---|---|---|---|---|---|---|---|
| | Flexible layer | | | | Sticky layer | | | | | | | | | | Al foil side of current collector | Ni foil side of current collector | |
| | Sticky material | Elastic material | Inorganic filler | Thickness (μm) | Constituents | Thickness (μm) | | | | | | | | | | | |
| Embodiment 37 | 80% cast polypropylene | 17% poly (ethylene-co-vinyl acetate) | 3% titanium dioxide powder | 20 | Polymethyl methacrylate | 5 | 100% | Single side of main body of electrode assembly | 0.256 | 359.7% | 60.3 | 28.43% | 18.54% | 6.24% | 100% | 100% | 95% |
| Embodiment 38 | 80% cast polypropylene | 17% poly (ethylene-co-vinyl acetate) | 3% titanium dioxide powder | 20 | Polymethyl methacrylate | 5 | 80% | Both sides of main body of electrode assembly | 0.257 | 349.8% | 59.8 | 27.80% | 19.32% | 5.87% | 100% | 100% | 100% |
| Embodiment 39 | 80% cast polypropylene | 17% poly (ethylene-co-vinyl acetate) | 3% titanium dioxide powder | 20 | Polymethyl methacrylate | 5 | 80% | Single side of main body of shell | 0.258 | 360.4% | 58.7 | 26.98% | 19.05% | 6.33% | 95% | 100% | 90% |
| Embodiment 40 | 80% cast polypropylene | 17% poly (ethylene-co-vinyl acetate) | 3% titanium dioxide powder | 20 | Polymethyl methacrylate | 5 | 80% | Both sides of main body of shell | 0.243 | 357.196 | 61.2 | 29.25% | 18.97% | 6.25% | 100% | 100% | 100% |

| | Adhesive layer | | | | | | Bonding area between adhesive layer and electrode | Affixing position of adhesive layer | Bonding force (N/mm) | Break-elongation rate | Elastic modulus E (MPa) | Impact-induced thickness change rate | Thickness recovery rate of adhesive layer 1 h after impact | Dissolution rate of electrolyte solution | Lateral extrusion test pass rate | | Heavy impact test pass rate |
| | Flexible layer | | | | Sticky layer | | | | | | | | | | Al foil side of current collector | Ni foil side of current collector | |
| | Sticky material | Elastic material | Inorganic filler | Thickness (μm) | Constituents | Thickness (μm) | | | | | | | | | | | |
| Comparative Embodiment 1 | 100% PET | \ | \ | 12 | Polymethyl methacrylate | 5 | 80% | Single side of main body of electrode assembly | 0.243 | 129.6% | 192.3 | 4.5% | 3.50% | 11.67% | 20% | 25% | 20% |
| Compartfive Embodiment 2 | 100% PET | \ | \ | 30 | Polymethyl methacrylate | 5 | 80% | Single side of main body of electrode assembly | 0.247 | 143.3% | 191.5 | 7.8% | 2.10% | 10.45% | 25% | 30% | 30% |
| Comparative Embodiment 3 | 100% PET | \ | \ | 42 | Polymethyl methacrylate | 5 | 80% | Single side of main body of electrode assembly | 0.252 | 92.696 | 187.6 | 9.70% | 3.10% | 11.14% | 25% | 40% | 25% |

Although illustrative embodiments have been demonstrated and described above, a person skilled in the art understands that the foregoing embodiments are never to be construed as a limitation on this application, and changes, replacements, and modifications may be made to the embodiments without departing from the spirit, principles, and scope of this application.

**Claims**

1. An electrochemical device, comprising an electrode assembly, a shell, and an adhesive layer, wherein the adhesive layer is disposed between the electrode assembly and the shell to fasten the electrode assembly and the shell, the adhesive layer comprises a flexible layer and a sticky layer, the sticky layer is disposed on an outer surface of the electrode assembly, the flexible layer is disposed on one side of the sticky layer, the one side of the sticky layer is oriented away from the electrode assembly, and an impact-induced thickness change rate of the adhesive layer is 10% to 40%.

2. The electrochemical device according to claim 1, wherein the impact-induced thickness change rate of the adhesive layer is 15% to 30%.

3. The electrochemical device according to claim 1 or 2, wherein a thickness recovery rate of the adhesive layer rested for 1 hour after impact is 2% to 30%.

4. The electrochemical device according to claim 1 or 2, wherein a thickness recovery rate of the adhesive layer rested for 1 hour after impact is 10% to 30%.

5. The electrochemical device according to claim 1 or 2, wherein a break-elongation rate of the flexible layer is 80% to 800%.

6. The electrochemical device according to claim 1 or 2, wherein a break-elongation rate of the flexible layer is 300% to 620%.

7. The electrochemical device according to claim 1 or 2, wherein an elastic modulus of the flexible layer is 2 MPa to 100 MPa.

8. The electrochemical device according to claim 1 or 2, wherein an elastic modulus of the flexible layer is 4 MPa to 60 MPa.

9. The electrochemical device according to claim 1 or 2, wherein the flexible layer comprises a sticky material, an elastic material, and an inorganic filler, and based on a total mass of the flexible layer, a mass percent of the sticky material is 70% to 95%, a mass percent of the elastic material is 4% to 30%, and a mass percent of the inorganic filler is 1% to 5%.

10. The electrochemical device according to claim 9, wherein the sticky material comprises one or more selected from the group consisting of poly(1,3-butadiene), cast polypropylene, or polycarbonate; the elastic material comprises one or more of poly(ethylene-co-vinyl acetate), polyurethane elastomer, poly(styrene-b-butadiene-b-styrene), poly(styrene-b-isoprene-b-styrene), poly(styrene-b-ethylene-b-propylene-b-styrene), poly(styrene-b-ethylene-b-butylene-b-styrene), polybutadiene, or polyisobutylene; and the inorganic filler comprises one or more of titanium dioxide powder, aluminum oxide, calcium sulfate, and barium sulfate.

11. The electrochemical device according to any one of claim 1 or 2, wherein the adhesive layer satisfies at least one of the following conditions (a) to (c):

    (a) a thickness of the flexible layer is 12 $\mu$m to 42 $\mu$m;
    (b) a thickness of the sticky layer is 3 $\mu$m to 8 $\mu$m; or
    (c) a dissolution rate of the adhesive layer in a lithium salt-free electrolyte solution is 0% to 10%.

12. The electrochemical device according to claim 1 or 2, wherein the sticky layer comprises one or more selected from the group consisting of polymethyl methacrylate, polypropylene, rubber, polyethylene, and polyamide.

13. The electrochemical device according to claim 1 or 2, wherein a bonding force between the sticky layer and the outer surface of the electrode assembly is 0.1 N/mm to 1.0 N/mm.

14. An electronic device, comprising the electrochemical device according to any one of claims 1 to 13.,

**FIG. 1**

**FIG. 2a**

FIG. 2b

FIG. 2c

FIG. 2d

FIG. 3

## INTERNATIONAL SEARCH REPORT

| | International application No. |
|---|---|
| | **PCT/CN2021/127967** |

**A. CLASSIFICATION OF SUBJECT MATTER**

H01M 10/058(2010.01)i; H01M 50/00(2021.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; ISI: 电化学装置, 电池, 电极组件, 电芯, 胶, 柔性, 缓冲, 粘结, 胶黏, 粘接, 黏结, 黏接, 黏合, 粘合, 外壳, 箱, 罐, 盒, 容器, 粘性, 挤压, 冲击, box, can?, shell, container, hous+, binder, bonding, strik+, impact+

**C. DOCUMENTS CONSIDERED TO BE RELEVANT**

| Category* | Citation of document, with indication, where appropriate, of the relevant passages | Relevant to claim No. |
|---|---|---|
| X | CN 105449255 A (DONGGUAN AMPEREX TECHNOLOGY LIMITED et al.) 30 March 2016 (2016-03-30)<br>description, paragraphs [0004]-[0290], and figures 1-6 | 1-14 |
| X | CN 102549801 A (LG CHEMICAL LTD.) 04 July 2012 (2012-07-04)<br>description, paragraphs [0010]-[0106], and figures 1-12 | 1-14 |
| X | CN 105742712 A (DONGGUAN AMPEREX TECHNOLOGY LIMITED et al.) 06 July 2016 (2016-07-06)<br>description, paragraphs [0004]-[0184], and figures 1-4 | 1-14 |
| A | CN 207596772 U (KUNSHAN RUIBO ELECTRONIC MATERIAL CO., LTD.) 10 July 2018 (2018-07-10)<br>entire document | 1-14 |
| A | CN 110350236 A (NINGDE CONTEMPORARY AMPEREX TECHNOLOGY CO., LTD.) 18 October 2019 (2019-10-18)<br>entire document | 1-14 |
| A | JP 2019102224 A (NEC ENERGY DEVICES LTD.) 24 June 2019 (2019-06-24)<br>entire document | 1-14 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **10 May 2022** | **27 May 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| INTERNATIONAL SEARCH REPORT | | | | | | | International application No. |
|---|---|---|---|---|---|---|---|
| Information on patent family members | | | | | | | **PCT/CN2021/127967** |

| Patent document cited in search report | | | Publication date (day/month/year) | Patent family member(s) | | | Publication date (day/month/year) |
|---|---|---|---|---|---|---|---|
| CN | 105449255 | A | 30 March 2016 | US | 2016043361 | A1 | 11 February 2016 |
| | | | | EP | 2983228 | A1 | 10 February 2016 |
| | | | | JP | 2016039126 | A | 22 March 2016 |
| | | | | JP | 6157445 | B2 | 05 July 2017 |
| | | | | EP | 2983228 | B1 | 15 November 2017 |
| | | | | CN | 105449255 | B | 08 January 2019 |
| CN | 102549801 | A | 04 July 2012 | KR | 20120035090 | A | 13 April 2012 |
| | | | | US | 2012115025 | A1 | 10 May 2012 |
| | | | | TW | 201226511 | A | 01 July 2012 |
| | | | | WO | 2012046911 | A1 | 12 April 2012 |
| | | | | US | 2015147640 | A1 | 28 May 2015 |
| | | | | TW | 201446935 | A | 16 December 2014 |
| | | | | EP | 2477252 | A1 | 18 July 2012 |
| | | | | JP | 2012529753 | A | 22 November 2012 |
| | | | | JP | 2015008140 | A | 15 January 2015 |
| | | | | KR | 101198294 | B1 | 07 November 2012 |
| | | | | JP | 5579863 | B2 | 27 August 2014 |
| | | | | US | 8980464 | B2 | 17 March 2015 |
| | | | | TW | 487764 | B1 | 11 June 2015 |
| | | | | CN | 102549801 | B | 25 May 2016 |
| | | | | JP | 6063418 | B2 | 18 January 2017 |
| | | | | EP | 2477252 | A4 | 22 February 2017 |
| | | | | TW | 595070 | B1 | 11 August 2017 |
| | | | | US | 9865848 | B2 | 09 January 2018 |
| | | | | EP | 2477252 | B1 | 19 August 2020 |
| CN | 105742712 | A | 06 July 2016 | JP | 2018505517 | A | 22 February 2018 |
| | | | | KR | 20170097678 | A | 28 August 2017 |
| | | | | EP | 3232501 | A1 | 18 October 2017 |
| | | | | WO | 2016090868 | A1 | 16 June 2016 |
| | | | | US | 2017263983 | A1 | 14 September 2017 |
| | | | | EP | 3232501 | A4 | 18 July 2018 |
| | | | | KR | 101913383 | B1 | 30 October 2022 |
| | | | | US | 10396403 | B2 | 27 August 2019 |
| | | | | JP | 6663431 | B2 | 11 March 2020 |
| CN | 207596772 | U | 10 July 2018 | None | | | |
| CN | 110350236 | A | 18 October 2019 | CN | 110350236 | B | 30 July 2021 |
| JP | 2019102224 | A | 24 June 2019 | None | | | |

Form PCT/ISA/210 (patent family annex) (January 2015)

**REFERENCES CITED IN THE DESCRIPTION**

**Patent documents cited in the description**

- CN 109256580 A